# EUROPEAN PATENT SPECIFICATION

(11) **EP 3 204 749 B1**
(45) Date of publication and mention of the grant of the patent: **06.06.2018**
(21) Application number: 14789893.6
(22) Date of filing: 07.10.2014
(51) Int. Cl.: G01N 7/00, G01N 21/05, G01N 21/35

(54) **LIQUID ANALYSER**
FLÜSSIGKEITSANALYSATOR
ANALYSEUR POUR LIQUIDES

(43) Date of publication of application: 16.08.2017
(73) Proprietor: FOSS Analytical A/S, 3400 Hillerød (DK)
(72) Inventor: ANDERSEN, Hans Villemoes, DK-3400 Hilleroed (DK); JUHL, Henrik Vilstrup, DK-4000 Roskilde (DK)
(86) International application number: PCT/IB2014/065111
(87) International publication number: WO 2016/055833

(56) References cited:
- EP-A1- 1 835 276
- EP-B1- 2 009 437
- US-A1- 2013 228 690

## Description

The present invention relates to a liquid analyser, particularly to a one having a flow system for transporting a liquid into and out of a measurement zone, more particularly to a liquid analyser configured to generate mid-infrared transmission and/or reflection spectra from the liquid which are useable in the compositional analysis of the liquid.

A liquid analyser is known, from for example US 2013/228690; EP 2009437 and EP 1835276, which broadly comprises a liquid sample intake for immersion in a liquid sample; a measurement zone, such as may be defined by a measurement cuvette or other liquid confinement region; and a sample exhaust; all connected via liquid conduits of a flow system. The flow system further comprises a flow control arrangement including a pump coupled to a section of the conduits between the sample intake and the measurement zone and operable to cause a flow of liquid into and out of the measurement zone. The known analyser further comprises a measurement section which includes a detector operable to analyse liquid at the measurement zone.

It is well known to determine components of a liquid sample using optical attenuation techniques, for example constituents of vinification products; or one or more of fat, lactose, glucose, protein, urea and/or adulterants in a fat-containing liquid sample such as in blood, milk or milk product samples. According to such techniques the liquid sample is interrogated by transmitting optical radiation into the liquid sample and measuring a wavelength dependent attenuation of the interrogating optical radiation caused by the sample using a spectrometer, such as an interferometer or a monochromator. From this measurement concentrations of components of interest within the sample may be calculated. The calculation is performed in a data processor using a calibration or predictive model by which is established a relationship between the component of interest and the measured wavelength dependent optical radiation attenuation. In the present context the term "optical radiation" shall be taken to mean radiation from within the electromagnetic spectrum extending throughout
some or the entire spectral region from ultra-violet to infrared - depending on the expected absorption properties of the sample to be interrogated. Typically for liquid samples mid-infrared radiation is advantageously employed.

In order to perform an accurate calculation it is necessary to accurately determine the amount of liquid interrogated by the optical radiation. This is most usually achieved by having the measurement zone in the form of a measurement cuvette of a precise and known thickness. For mid-infrared measurements this thickness is typically of the order of around 50 micrometers (µm).

As a part of milk production, for example, milk components are increasingly being split up and recombined through osmoses and filtration techniques in order to generate precisely reproducible milk products. This practice results in milk concentrates and milk isolates that are viscous and may contain high levels of lactose and total solids. Moreover, dairies are seeking to differentiate themselves through the introduction of products for high value segments like nutrition, sports and health. This means adding natural and artificial flavours, adding concentrates and substituting components with pectin, starches and gelatine for texture.

Overall, the resulting diverse milk and yoghurt products which are manufactured today are likely to contain a range of particles as well as additives that make them difficult to handle in the flow system of the known liquid analyser. Particles may cause blockages, particularly at the sample intake and at the measurement zone and additives often increase the viscosity of the liquid being pumped which may make it difficult to transport the liquid into and out of the measurement zone. These issues are, as will be appreciated, not limited to milk and become particularly problematical when a measurement cuvette is employed which is dimensioned for use in mid-infrared analysis.

It is the aim of the present invention to provide a liquid analyser having a liquid flow system which is more robust, making the analyser more versatile, over the known analyser and to thereby provide one which addresses one or more of the aforementioned problems associated with the known liquid analyser.

Accordingly there is provided a liquid analyser as set out in and delimited by the present claim 1.

A liquid analyzer comprising a liquid sample intake for immersion in a liquid sample; at least one measurement zone; liquid conduits disposed to connect in flow communication the sample intake and the at least one measurement zone; and a first pump module, preferably comprising a positive displacement pump such as a syringe pump, coupled to the liquid conduits and being operable to effect liquid flow therein; wherein the liquid analyser further comprises a first pressure monitor disposed to measure pressure between the sample intake and the at least one measurement zone and a controller adapted to receive an output from the first pressure monitor representative of the measured pressure and to control the operation of the first pump module to regulate the liquid flow in the liquid conduits in dependence thereon. Thus the flow rate in the liquid analyser may be automatically adapted to the viscosity, as indicated from the pressure measurements, of the sample being taken in through the sample intake.

Usefully, the controller is adapted to control the operation of the first pump module in response to the received output from the first pressure monitor to maintain the monitored pressure at a value at or above a preset value as the module operates to move liquid sample from the sample intake. In this way as the viscosity of the liquid being pumped increases the flow rate of the liquid can still follow the pump speed of the pump. In particular, when a syringe pump is employed in the first pump module the likelihood that the piston movement is not followed by sample intake into the syringe chamber is reduced.

Blockages may also be detected from the monitored pressure and corrective operation of the pump module can be automatically initiated.

In one embodiment blockages at the sample intake may be detected from monitoring the output from the first pressure monitor to determine whether an increasing pressure drop occurs during the operation of the first pump to move liquid in a direction from the liquid sample intake to the first pump. This indicates a blockage of the sample intake. The controller is configured to back-flush the sample intake by then reversing the direction of liquid flow produced by the first pump module to cause liquid to flow from the first pump and out of the liquid sample intake. Usefully, the liquid analyser further comprises drive means operably connected to the liquid sample intake to vary its location within the liquid sample which may be operated after such a back-flush. Thus the possibility of back-flushed material reentering the sample intake is reduced.

These, as well as additional objects, features and advantages of the present invention, will be better understood through a consideration of the following illustrative and non-limiting detailed description of one or more embodiments of the present invention, made with reference to the drawings of the appended figures, of which:
Fig. 1 shows a schematic representation of a liquid analyser according to the present invention; and
Fig. 2 shows a schematic representation of a back-pressure valve suitable for use in the liquid analyser according to the present invention;

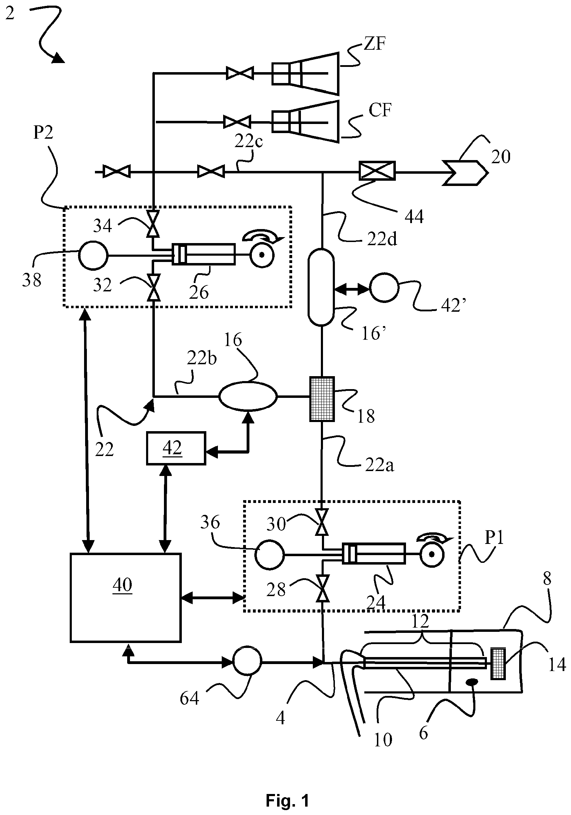

Considering now an exemplary embodiment of a liquid analyser 2 which is illustrated in Fig. 1. A liquid sample intake 4, exemplified in the present embodiment by a pipette, is provided as part of the liquid analyser 2 for immersion into a liquid sample 6 which is here illustrated as being contained in beaker 8. Advantageously, but not essentially, a heater 10 is located in thermal contact with the liquid sample intake 4 to heat the portion of the sample 6 within the liquid sample intake 4. This minimizes the length of the flow system as provision of a separate sample heater in-line with the intake 4 will add both volume and length to the flow system. Furthermore, it will be appreciated that most samples have lower viscosity when they are heated. This means that sample can be pumped easier/faster using a heated liquid sample intake 4. It will be appreciated that the heater 10 may be realised in many ways known in the art but is here, by way of example only, a simple resistive heater having a wire heating element wrapped around the liquid sample intake 4. In order to prevent particles (typically larger particles), fibres or other debris from entering the liquid analyser 2 a filter 14 may be provided at the open tip of the liquid sample intake 4. Advantageously, the sample temperature is measured proximal the open tip of the liquid sample intake 4. Together with the temperature of the heated section 12 of the liquid sample intake 4. The temperature measurement at the heated section 12 may usefully be employed in a control loop of the heater 10. The measurement of the sample temperature may usefully be employed in a feed forward control of the heating. By knowing the sample temperature and intake volumes and when the sample is transported a faster and a better correction of temperature can be obtained.

At least one, in the present embodiment two, measurement zone 16; 16' is also provided as part of the liquid analyser 2. One measurement zone 16 is, by way of example and in the present embodiment, delimited by a measurement cuvette formed at least in part of a material which is translucent for optical radiation to be employed to interrogate a liquid sample within the measurement zone 16. Usefully an in-line filter 18 may be provided before the measurement cuvette measurement zone16, in the direction of flow of liquid into the first measurement zone 16 from the liquid sample intake 4. Preferably, the in-line filter 18 should be placed proximal the inlet to the measurement zone 16 in order to reduce the volume of liquid sample to be filtered before analysis and hence reduce the load on the filter 18, thereby reducing the potential for the filter 18 to clog. The shape and construction of the measurement zone 16 will depend on the measurement technique being employed in the liquid analyser 2 in order to perform analysis of the liquid sample.

A sample exhaust 20 is provided as a component of the liquid analyser 2 to receive liquid sample which has been introduced into the liquid analyser 2 through the liquid sample intake 4. In the present embodiment the sample exhaust 20 is provided to channel liquid to waste but in other embodiments could be configured to transfer liquid for re-use (such a configuration may usefully be employed when the sample analyser 2 is disposed in a by-pass branch of a flow conduit in a production line).

A flow system is also included in the liquid analyser 2 and comprises liquid conduits 22 disposed to connect in flow communication with at least the liquid sample intake 4; the measurement zone 16 and, here also, the sample exhaust 20. The flow system further comprises a first pump module P1 having a pump 24, preferably a positive displacement pump, more preferably a syringe type piston pump, operatively coupled in-line to a section 22a of conduits 22 connecting the liquid sample intake 4 with the measurement zone 16. Also optionally included as a part of the flow system is a second pump module P2 having a pump 26, preferably a positive displacement pump, more preferably a syringe type piston pump, which is operatively coupled in-line to a section 22b of conduits 22 after the measurement zone 16, in a direction of liquid flow from the first pump 24 to the measurement zone 16 and is preferably also in liquid communication with the sample exhaust 20 via a section 22c of the conduits 22 of the flow system.

A positive displacement pump has an expanding cavity on the suction side and a decreasing cavity on the discharge side. Liquid flows into the pump as the cavity on the suction side expands and the liquid flows out of the discharge as the cavity collapses. The volume is constant given each cycle of operation. Thus, a positive displacement pump will produce the same flow at a given pump speed no matter the discharge pressure. This has led the positive displacement pump to become known as a "constant flow machine". The positive displacement pumps 24;26 are preferably realised as piston pumps since advantageously such piston pumps have a separate suction and discharge phases of its operational cycle and a cavity volume which can be relatively easily adjusted (both size limits and rate of change) to adjust flow conditions within the liquid analyser 2.

According to the present embodiment and by way of example only, the pump modules P1, P2 are constructed identically and each further comprises flow control valves 28,30; 32,34 and first and second pressure monitors 36;38 as components of P1 and P2 respectively. Optionally and not shown separate heater elements (such as wire wound resistive heater elements) may be placed in thermal contact with each pump 24;26 in order to help maintain a desired temperature of liquid sample within the liquid analyser 2. In one embodiment a heater element may be provided in thermal contact with only the first pump 24 to maintain a desired temperature of liquid sample passing into the one or more measurement zones 16;16'.

A controller 40 is provided in operable connection with at least the first pump module P1 and, as illustrated in the present exemplary embodiment, is also provided in operable connection with the second pump module P2 when this pump module P2 is present. The controller 40 is configured to receive as an input an output from at least the first pressure monitor 36 which represents a pressure measured by that monitor 36. The controller 40 is further configured to provide as an output a control signal to at least the first module P1 by which its operation is controlled so as to regulate liquid flow in the flow system in response to the output from at least the first pressure monitor 36, as will be described in more detail below. It will be appreciated that although illustrated in the present embodiment as a single unit, the controller 40 may comprise two or more units, each of which may be configured to provide a sub-set of the functionality of the controller 40 but all of which cooperate to together provide the overall functionality of the controller 40 as described herein. Moreover, the controller 40 may be realised as a component of a unit which is configured to provide functionality in addition to that of the controller 40 as described herein, for example the controller 40 may be realised as part of a data processor which is further configured to process measurement data (as described below) in order to provide a compositional analysis of liquid in the one or more measurement zones 16; 16'.

The liquid analyser 2 further comprises a measurement section 42 providing a suitable measurement modality, which in the present embodiment is an optical spectrometer based measurement modality. In this embodiment the measurement section 42 comprises an optical spectrometer instrument configured in optical coupling with the measurement cuvette 16 and is adapted, in a manner well known in the art, to interrogate the portion of liquid sample in the measurement cuvette 16 by transmitting optical radiation, for example mid-infrared optical radiation, into the liquid sample and measuring a wavelength dependent attenuation of the interrogating optical radiation caused by the sample, typically after transmission through the sample, using a spectrometer, such as an interferometer or a monochromator. A data processor component (not shown) of the measurement section 42 is conventionally programmed to perform a standard chemometric treatment of the measured wavelength dependent attenuation. A compositional analysis of the so interrogated liquid sample is thereby generated, for example analysis of specific components of interest within the sample, such as protein, lactose, fat, total solids in processed or unprocessed milk or milk products; such as alcohols, sugars, acids, tannin, in wine or vinification products; or an analysis for the presence of adulterants in or additives to the liquid sample.

Usefully, the controller 40 may be configured to, in use, control the intake liquid sample without prior knowledge of the rheological properties of the sample itself. The controller 40 should preferably be able to adjust the operation of at least the first pump module P1 during intake of liquid sample such that at least one of the functions is met:
- The sample intake should be as fast as possible.
- Filters with increasing pressure drop should be cleaned.
- Never go below a minimum preset pressure in the flow system.
- Samples are measured as a number of sub samples.

The adjustments are done based primarily on the input from at least the first pressure monitor 36.

Exemplary operation sequences of one or both pump modules P1, P2 will now be described in order to provide a better understanding of the operation and advantages of the flow system of liquid analyser 2 according to the present invention. The description will be made with respect to the analysis of milk or milk based products but it will be appreciated that any numerical limitations are to be adjusted depending on the type of sample to be analysed.

During a milk sample intake phase of operation of the analyser 2 valve 28 is opened and 30 is closed and the pump 24 is operated to draw in liquid sample from sample beaker 8 by being accelerated to generate a predetermined pressure as monitored by pressure monitor 36 of up to, for example, approx 0.2 bar absolute (80% vacuum). The maximum speed will depend on the viscosity of the sample. At low viscosity the flow rate will tend to be limited by the max speed of the pump 24. As the viscosity increases the pump speed must be reduced in order to ensure that the pressure drop from pipette filter 14 to pump 24 does not fall below the preset minimum of 0.2 bar absolute, as measured by the pressure monitor 36. In this way there is a reduction in the likelihood of the piston movement not being followed by the liquid intake as the viscosity of the liquid varies.

With liquid samples without particles a same pump speed can be maintained until the piston chamber of pump 24 is full. Samples containing larger particles will normally result in a decrease in flow rate whilst maintaining the monitored pressure drop at the preset minimum.

If the flow becomes too low as indicated by a pressure drop monitored by the first pressure monitor 36 which continues to increase as pump 24 is operated to move liquid sample in the direction from the sample intake 4 into the first pump 24 then this is an indication that the liquid sample intake filter 14 is becoming clogged and is in need of cleaning. In the present invention this cleaning may be achieved by having the controller 40 control the pump module P1 to back-flush the filter 14. Thus, on receipt by controller 40 of the output signal from the pressure monitor 36 which indicates one or both a continuous decrease in pressure or a pressure value below a preset lower limit as the first pump 24 is operated to draw in liquid through the sample intake 4 (controller 40 controlling module P1 to open valve 28, close valve 30 and operate pump to increase piston chamber volume) the controller 40 issues a control signal to pump module P1 which causes a reversal of liquid flow. The control signal thus causes the first piston pump 24 to reverse the direction of movement of its piston, thereby reducing the piston chamber volume and producing a liquid flow through the sample intake filter 14 and back into the sample in the beaker 8.

Preferably a drive means 64, for example a motor, is mechanically connected to the liquid sample intake 4 and is operable to move, for example translate, the sample intake 4 (or at least a portion containing its open tip) and thereby also relocate the intake filter 14 to a different position within the liquid sample 6. Movement of the sample intake 4 is done at least at (during and/or after) back-flushing and may usefully be initiated by receipt of a signal from controller 40. Relocating the sample intake filter 14 will reduce the possibility that the same particles as flushed from the filter 14 will be sucked into the liquid sample intake 4 when sample intake is re-initiated by controller 40.

During a sample presentation phase of operation of the analyser 2 the controller 40 issues a control signal to pump module P1 causing closure of valve 28, opening of valve 30 and operation of the pump 24 to decrease the volume of its pump chamber thereby causing liquid sample contained therein to be transported towards the measurement zone 16 at a flow rate X ml/sec. Initially the flow of liquid sample removes carryover in the measurement zone 16. The flow rate may usefully be determined from the viscosity (as represented by pressure monitored by pressure monitor 36) measured from the liquid sample intake phase of operation of the analyser 2. Controller 40 issues a control signal to the second pump module P2. This control signal initiates opening of valve 32, closure of valve 34 and operation of the second pump 26 to increase its piston chamber volume and suck liquid to cause flow in a direction from the measurement zone 16 towards the second pump 26, usefully but not essentially at a lower flow rate, for example X/2 ml/sec. When the second pump 26 is operated to cause a lower flow rate an amount of liquid sample is flowed in conduit section 22d in a ratio depending on the ratio of the flow rates caused by the first and second pumps 24;26. In some embodiments this flow in conduit section 22d will be useful in providing flushing of the filter 18 associated with the inlet of the measurement zone 16. In other embodiments and as illustrated in the present embodiment, this flow in conduit section 22d is employed to introduce liquid sample into a second measurement zone 16'. The optionally provided second measurement zone 16' has associated therewith a second, possibly different, measurement modality of measurement section 42' for interrogating a portion of the liquid sample which is present in the second measurement zone 16'. By way of example the second measurement zone 16' is delimited by a flow cell which is operably associated with a conductivity meter of the second measurement section 42' in order to measure the electrical conductivity of the liquid sample in that second measurement zone 16'. In milk for example, such conductivity measurements may be usefully employed to provide in a known manner a prediction of freezing point depression in that sample and hence water content. According to a further example the second (or a further) measurement zone 16' may be a second optical cuvette designed to provide a different optical path through a liquid sample therein and optionally associated with spectrometric measurements in a different wavelength region from that employed with the spectrometer of the first measurement section 42 which is associated with the first measurement zone 16. Further measurement zones and/or other measurement modalities may be provided as a part of the liquid analyser 2 without departing from the invention as claimed.

The controller 40 may be configured to control the first pump 24 and the second pump 26 to operate intermittently. When the first and second pumps 24;26 are stopped during this intermittent operation a measurement is taken on a static liquid subsample which is at that time present in the measurement zone 16 (a further measurement zone 16'). Controller 40 monitors the pressure at pump 26 as derived from the output of pressure monitor 38. If it is stable then after a predetermined time, sufficient to permit a measurement, the controller 40 issues control signals to restart the pumping operation of the two pumps 24;26 as described above in order to replace (at least in part but preferably entirely) the volume of liquid sample that was measured on in the measurement zone 16 at which point the first and second pumps 24:26 are again stopped and new measurements made. This sequence of operations may be repeated for the number of subsamples that is needed in order to provide a sufficiently representative measurement of the sample (for example as may be determined from a standard deviation of the measurements). It will be appreciated that the amount of sample in an optical cuvette is typically significantly smaller than the total amount of sample in the beaker 8 so that a measurement on such a small sample aliquot may not be representative of the whole, especially where the sample in the beaker 8 is inhomogeneous.

A probable clogging of the intake filter 18 is indicated if, from the output of the second pressure monitor 38, the controller 40 registers a pressure drop at the second pump 26 during the intake of sample into the measurement zone 16. A back-flush of this filter 18 is then initiated by the controller 40. The controller 40 outputs instructions to the first and the second pump modules P1;P2 causing valves 30;32 and 34 to close, the first pump 24 to stop and the second pump 26 to reverse its direction of operation to reduce the volume of its piston chamber volume by a small amount. This builds up pressure and then the controller 40 issues instructions to open the valve 32 towards the measurement zone 16. A back-pressure valve 44 which is often associated with a sample exhaust 20 in such a liquid analyser may also be caused to be opened substantially simultaneously, preferably also under control of controller 40, in order to increase the pressure drop across the filter 18 and thus enhance the back-flushing.

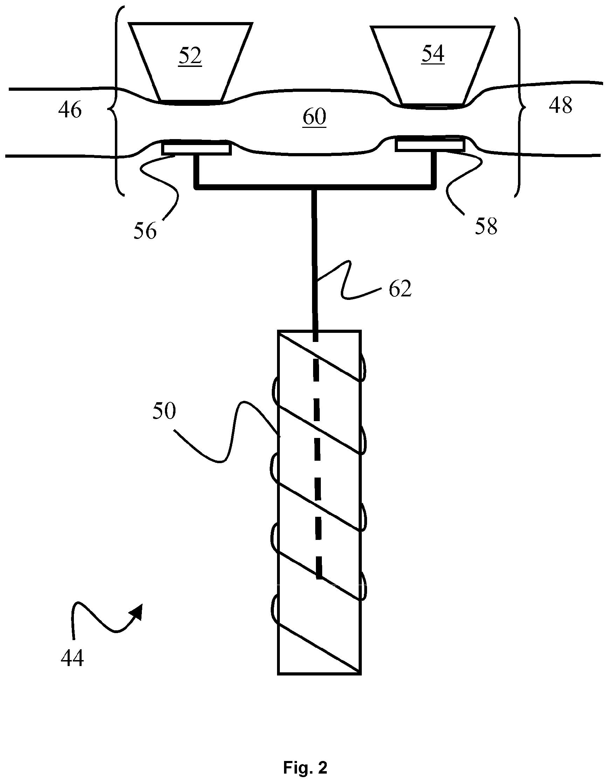

This back-pressure valve 44 may be of conventional construction such as a biased membrane or ball back-pressure valve. However, in some situations a low or no back-pressure is advantageous while in others a high back pressure is advantageous. Thus it would be useful to realise a back-pressure valve by which an adjustable back-pressure may be relatively simply created. Moreover, the known back-pressure valve is prone to accumulating particles at the membrane or ball, with leakage and unstable back-pressure as a consequence. Usefully, to mitigate at least one of these problems the back-pressure valve 44 may be one which is constructed as illustrated in Fig. 2.

As illustrated to Fig. 2, the back-pressure valve 44 may be realized as a tube valve, where usefully the holding pressure closing the valve 44 can be adjusted from software. A tube 60, when open is much easier to clean by flushing than a membrane of a known back-pressure valve. The problem is how much force is needed to overcome the elasticity of the tube 60. However, this may be measured in the flow system of the present liquid analyser 2 by the pressure monitors 36; 38 associated with the first and the second pumps 24; 26 respectively. These two measurements represent effectively the pressure in the appropriate measurement zone 16 or 16'. Optionally and as illustrated in Fig 2, two pressure zones can be used to provide the valve 44 with two pinch closures 46; 48. This reduces the risk of particles causing malfunction. The pressure at each zone can be applied by a single solenoid 50 or alternatively individual solenoids for each pinch closure 46; 48. Each pinch closure 46; 48 may, as illustrated in the present embodiment, include a static surface 52; 54 placed in opposition to a moveable surface 56; 58 and between which pairs of static and moveable surfaces 52,56; 54,58 of the pinch closures 46; 48 the tube 60 is located. A single push rod 62 connects the moveable surfaces 56; 58 and has a portion passing into the solenoid 50. The push rod 52 is reciprocally moveable dependent on the magnitude and possibly the direction of electric current flowing through the solenoid 50. It may be necessary to operate this solenoid 50 away from the highly nonlinear region. The pressure can also be applied with a coil in a magnetic circuit with a permanent magnet. The electric current within either the coil or solenoid 50 50 preferably controlled by a control signal issued from the controller 40 in response to the pressure in the system, for example as given by the mean of the pressures measured by the pressure monitors 36;38, In this way an adjustable back-pressure in the flow system 22 can be realised.

It will be appreciated from the foregoing that by combining the pressure measurements made by the first and the second pressure monitors 36;38 and the manner in which the first and the second pumps 24;26 and the valves 28,30;32,34 are operated then an automated measurement sequence can be established that flows each sample optimally.

Additionally or optionally a cleaning phase in the operation of the liquid analyser 2 may also be provided and may usefully be initiated after back-flushing. The flow system is cleaned backwards i.e. in a flow direction from pump module P2 towards the first pump module P1. First the conduit section from the pump module P2 to the waste funnel is flushed, then the bypass string from pump module P2 to pump module P1. Then the pipette 4 is back flushed. It is then tried if the cuvette of the first measurement zone 16 can be back flushed using pump module P2 to push and pump module P1 to suck. Additionally or alternatively a foam clean of the cuvette is preferably but not essentially performed, typically after the above described back-flushing.

Foam clean is achieved by introducing a detergent, such as a low foam detergent, from a flow connected holder CF, preferably mixed with air, into at least the measurement zone (cuvette) 16. In this exemplary embodiment the detergent/air mixture is introduced into the section of the flow system between and including the pump modules P1 and P2 and the measurement zone (cuvette) 16 and preferably also the in-line filter 18. The modules P1 and P2 are operated by controller 40 to agitate the detergent/air mixture in at least the cuvette 16, preferably by causing detergent/air mixture to move into and out of the cuvette 16.

It will be appreciated that the cleaning phase, including the optional foam clean, may be performed in embodiments of the liquid analyser 2 according to the present invention in which only one pump module, P1 say, is provided and controlled by controller 40 to cause agitation of detergent from holder CF within at least the measurement zone 16 .

Throughout the cleaning process the pressures as monitored by the first and the second pressure monitors 36; 38 are used by the controller 40 for generating control signals in order to adjust the pump speed and to not put too much pressure on the cuvette and flow conduit 22 (insufficient to cause their permanent distortion or failure). It is also used to evaluate if a section of the flow conduit 22 is fully or partial blocked.

After cleaning an optical spectrum may be usefully obtained using the first measurement section 42 on a so-called "zero liquid" from a flow connected holder ZF, which zero liquid is located in the first measurement zone (cuvette) 16. The so obtained spectrum is compared with a previously obtained spectrum from the zero liquid held in the cuvette 16 when known to be clean in order to evaluate how clean the cuvette 16 is presently. It will be appreciated that any reference liquid may be employed in place of the zero liquid; all that is required is that the liquid from which the two spectra are obtained for comparison is the same spectrally speaking. The cleaning phase may then be repeated if the result of the comparison indicates that the measurement zone (cuvette) 16 is not sufficiently clean.

Optionally, at least the pressure drop across cuvette-filter 18 and cuvette 16 is also measured after cleaning.

The basic concept is to have feedback (pressure and/or spectra) in the cleaning procedure - and to be able to report if it is not cleaned well i.e. if spectral comparison and/or measured pressure drop is outside predetermined limits.

It will be appreciated that whilst the present invention has been described in relation to an analyser having two pump modules P1:P2, one either side of the one or more measurement zones 16;16', the functionality of the analyser may be achieved using just one (or more than two) pump module without departing from the invention as claimed.

## Claims

1. A liquid analyzer (2) comprising a liquid sample intake (4) for immersion in a liquid sample (6); at least one measurement zone (16;16'); liquid conduits (22) disposed to connect in flow communication the liquid sample intake (4) and the at least one measurement zone (16;16'); and a first pump module (P1) coupled to the liquid conduits (22) and operable to effect liquid flow therein; **characterised in that** the liquid analyser (2) further comprises a first pressure monitor (36) disposed to measure pressure between the sample intake (4) and the at least one measurement zone (16' 16') and a controller (40) adapted to receive an output from the first pressure monitor (36) representative of the measured pressure and to control the operation of the first pump module (P1) to regulate the liquid flow in the liquid conduits (22) in dependence thereon.

2. A liquid analyser (2) as claimed in claim 1 **characterised in that** the first pump module (P1) comprises a first pump (24) coupled to a section (22a) of the liquid conduits (22) between the liquid sample intake (4) and the at least one measurement zone (16;16'); and **in that** the first pressure monitor (36) is coupled to the first pump (24) to monitor pressure there at.

3. A liquid analyser (2) as claimed in claim 2 **characterised in that** the first pump (24) is a positive displacement pump coupled in-line to the section (22a) of the liquid conduits (22) via valving means (28,30) configured to selectively fluidly isolate the first pump (24) from a one or neither of the liquid sample intake (4) and the at least one measurement zone (16;16') under control of the controller (40).

4. A liquid analyser as claimed in claim 3 **characterised in that** the controller (40) is adapted to control the operation of the valving means (28,30) and of the first pump (24) to cause liquid to flow in a direction from the first pump (24) and out of the liquid sample intake (4) in response to the received output from the first pressure monitor (36) having indicated an increasing pressure drop during the operation of the first pump (24) to move liquid sample (6) in a direction from the liquid sample intake (4) to the first pump (24).

5. A liquid analyser (2) as claimed in claim 4 **characterised in that** the liquid analyser (2) further comprises drive means (64) operably connected to the liquid sample intake (4) to vary its location within the liquid sample (6).

6. A liquid analyser (2) as claimed in any of the claims 1 to 5 **characterised in that** the controller (40) is adapted to control the operation of the first pump module (P1) in response to the received output from the first pressure monitor (36) to maintain the monitored pressure at a value at or above a preset value during movement of liquid sample (6) in a direction from the liquid sample intake (4) into the liquid flow conduits (22).

7. A liquid analyser (2) as claimed in any of the claims 1 to 6 **characterised in that** the liquid analyser (2) includes a second pump module (P2) coupled to a section (22b) of the liquid flow conduits (22) after a one of the at least one measurement zones (16) in a direction of liquid flow from the first pump module (P1) to that measurement zone (16) and **in that** a second pressure monitor (38) is provided to monitor pressure at the second pump module (P2), the second pressure monitor (38) being configured to generate an output representative of a monitored pressure at the second pump module (P2) for receipt by the controller (40) and useable by the controller (40) to control the operation of the first (P1) and the second (P2) pump modules.

8. A liquid analyser (2) as claimed in claim 7 **characterised in that** the controller (40) is adapted to control the operation of the first (P1) and the second (P2) pump modules to regulate the flow of liquid through the at least one measurement zone (16;16') in dependence of the output from the first pressure monitor (36) received during operation of the first pump module (P1) to move liquid from the sample intake (4).

9. A liquid analyser (2) as claimed in claim 7 or claim 8 **characterised in that** there is provided a source of liquid detergent (CF) for supplying liquid detergent with or without air via the liquid conduits (22) into the at least one measurement zone (16;16') and **in that** the controller (40) is adapted to operate one or both of the first pump module (P1) and the second pump module (P2) to agitate the liquid detergent with or without air in the at least one measurement zone (16;16').

## Patentansprüche

1. Flüssigkeitsanalysator (2), umfassend einen Flüssigkeitsprobeneinlass (4) zum Eintauchen in eine Flüssigkeitsprobe (6); mindestens eine Messzone (16; 16'); Flüssigkeitsleitungen (22), die so angeordnet sind, dass sie den Flüssigkeitsprobeneinlass (4) und die mindestens eine Messzone (16; 16') in Strömungsverbindung miteinander verbinden; und ein erstes Pumpenmodul (P1), das mit den Flüssigkeitsleitungen (22) verkoppelt und betreibbar ist, um einen Flüssigkeitsstrom darin zu bewirken; **dadurch gekennzeichnet, dass** der Flüssigkeitsanalysator (2) ferner einen ersten Druckwächter (36), der so angeordnet ist, dass er den Druck zwischen dem Probeneinlass (4) und der mindestens einen Messzone (16', 16') misst, und einen Regler (40) umfasst, der dazu eingerichtet ist, von dem ersten Druckwächter (36) eine Ausgabe zu empfangen, die den gemessenen Druck darstellt, und den Betrieb des ersten Pumpenmoduls (P1) zu steuern, um den Flüssigkeitsstrom in den Flüssigkeitsleitungen (22) in Abhängigkeit davon zu regeln.

2. Flüssigkeitsanalysator (2) nach Anspruch 1, **dadurch gekennzeichnet, dass** das erste Pumpenmodul (P1) eine erste Pumpe (24) umfasst, die mit einem Abschnitt (22a) der Flüssigkeitsleitungen (22) zwischen dem Flüssigkeitsprobeneinlass (4) und der mindestens einen Messzone (16; 16') verkoppelt ist; und dass der erste Druckwächter (36) mit der ersten Pumpe (24) verkoppelt ist, um dort den Druck zu überwachen.

3. Flüssigkeitsanalysator (2) nach Anspruch 2, **dadurch gekennzeichnet, dass** die erste Pumpe (24) eine Verdrängungspumpe ist, die in Reihe mit dem Abschnitt (22a) der Flüssigkeitsleitungen (22) über Ventilmittel (28, 30) verkoppelt ist, die so konfiguriert sind, dass sie die erste Pumpe (24) wahlweise von einer oder keiner der Flüssigkeitsprobeneinlässe (4) und der mindestens einen Messzone (16; 16') unter Steuerung des Reglers (40) strömungstechnisch trennen.

4. Flüssigkeitsanalysator nach Anspruch 3, **dadurch gekennzeichnet, dass** der Regler (40) dazu eingerichtet ist, den Betrieb der Ventilmittel (28, 30) und der ersten Pumpe (24) zu steuern, um zu bewirken, dass als Reaktion auf die empfangene Ausgabe des ersten Druckwächters (36), der einen zunehmenden Druckabfall während des Betriebs der ersten Pumpe (24) angezeigt hat, Flüssigkeit in einer Richtung von der ersten Pumpe (24) und aus dem Flüssigkeitsprobeneinlass (4) fließt, um eine Flüssigkeitsprobe (6) in eine Richtung von dem Flüssigkeitsprobeneinlass (4) zu der ersten Pumpe (24) zu bewegen.

5. Flüssigkeitsanalysator (2) nach Anspruch 4, **dadurch gekennzeichnet, dass** der Flüssigkeitsanalysator (2) ferner Antriebsmittel (64) aufweist, die mit dem Flüssigkeitsprobeneinlass (4) wirkverbunden sind, um seine Position innerhalb der Flüssigkeitsprobe (6) zu verändern.

6. Flüssigkeitsanalysator (2) nach einem der Ansprüche 1 bis 5, **dadurch gekennzeichnet, dass** der Regler (40) dazu eingerichtet ist, den Betrieb des ersten Pumpenmoduls (P1) als Reaktion auf die empfangene Ausgabe von dem ersten Druckwächter (36) zu steuern, um den überwachten Druck auf einem Wert bei oder über einem voreingestellten Wert während der Bewegung der Flüssigkeitsprobe (6) in einer Richtung von dem Flüssigkeitsprobeneinlass (4) in die Flüssigkeitsströmungskanäle (22) zu halten.

7. Flüssigkeitsanalysator (2) nach einem der Ansprüche 1 bis 6, **dadurch gekennzeichnet, dass** der Flüssigkeitsanalysator (2) ein zweites Pumpenmodul (P2) umfasst, das mit einem Abschnitt (22b) der Flüssigkeitsströmungsleitungen (22) nach einer der mindestens einen Messzonen (16) in einer Flüssigkeitsströmungsrichtung von dem ersten Pumpenmodul (P1) zu dieser Messzone (16) verkoppelt ist, und dass ein zweiter Druckwächter (38) vorgesehen ist, um den Druck an dem zweiten Pumpenmodul (P2) zu messen, wobei der zweite Druckwächter (38) dazu konfiguriert ist, eine Ausgabe zu erzeugen, die einen überwachten Druck an dem zweiten Pumpenmodul (P2) zum Empfang durch den Regler (40) darstellt und von dem Regler (40) verwendet werden kann, um den Betrieb des ersten (P1) und des zweiten (P2) Pumpenmoduls zu steuern.

8. Flüssigkeitsanalysator (2) nach Anspruch 7, **dadurch gekennzeichnet, dass** der Regler (40) dazu eingerichtet ist, den Betrieb des ersten (P1) und des zweiten (P2) Pumpenmoduls zu steuern, um den Flüssigkeitsstrom durch die mindestens eine Messzone (16; 16') in Abhängigkeit der während des Betriebs des ersten Pumpenmoduls (P1) empfangenen Ausgabe von dem ersten Druckwächters (36) zu regeln, um Flüssigkeit aus dem Probeneinlass (4) zu bewegen.

9. Flüssigkeitsanalysator (2) nach Anspruch 7 oder Anspruch 8, **dadurch gekennzeichnet, dass** eine Quelle für flüssiges Reinigungsmittel (CF) zum Zuführen von flüssigem Reinigungsmittel mit oder ohne Luft über die Flüssigkeitsleitungen (22) in die mindestens eine Messzone (16; 16') vorgesehen ist, und dass der Regler (40) dazu eingerichtet ist, eines oder beide des ersten Pumpenmoduls (P1) und des zweiten Pumpenmoduls (P2) zu betreiben, um das flüssige Reinigungsmittel mit oder ohne Luft in der mindestens einen Messzone (16; 16') durchzurühren.

## Revendications

1. Analyseur (2) pour liquides, comprenant une admission d'échantillon de liquide (4) pour immersion dans un échantillon de liquide (6) ; au moins une zone de mesure (16 ; 16') ; des conduites de liquide (22) disposées pour relier en communication fluidique l'admission d'échantillon de liquide (4) et l'au moins une zone de mesure (16 ; 16') ; et un premier module de pompe (P1) couplé aux conduites de liquide (22) et permettant d'entraîner un écoulement de liquide à l'intérieur de celles-ci ; **caractérisé par le fait que** l'analyseur (2) pour liquides comprend en outre un premier moniteur de pression (36) disposé pour mesurer une pression entre l'admission d'échantillon (4) et l'au moins une zone de mesure (16 ; 16'), et une unité de commande (40) conçue pour recevoir une sortie provenant du premier moniteur de pression (36) et représentant la pression mesurée et pour commander le fonctionnement du premier module de pompe (P1) afin de réguler l'écoulement de liquide dans les conduites de liquide (22) en fonction de celle-ci.

2. Analyseur (2) pour liquides selon la revendication 1, **caractérisé par le fait que** le premier module de pompe (P1) comprend une première pompe (24) couplée à une section (22a) des conduites de liquide (22) entre l'admission d'échantillon de liquide (4) et l'au moins une zone de mesure (16 ; 16') ; et **par le fait que** le premier moniteur de pression (36) est couplé à la première pompe (24) pour surveiller une pression au niveau de celle-ci.

3. Analyseur (2) pour liquides selon la revendication 2, **caractérisé par le fait que** la première pompe (24) est une pompe volumétrique couplée en ligne à la section (22a) des conduites de liquide (22) par l'intermédiaire de moyens de robinetterie (28, 30) configurés pour de manière sélective isoler fluidiquement la première pompe (24) vis-à-vis de l'une, ou des deux, de l'admission d'échantillon de liquide (4) et de l'au moins une zone de mesure (16 ; 16'), sous la commande de l'unité de commande (40).

4. Analyseur pour liquides selon la revendication 3, **caractérisé par le fait que** l'unité de commande (40) est conçue pour commander le fonctionnement des moyens de robinetterie (28, 30) et de la première pompe (24) pour amener du liquide à s'écouler dans une direction à partir de la première pompe (24) et hors de l'admission d'échantillon de liquide (4) en réponse à la sortie reçue, à partir du premier moniteur de pression (36), ayant indiqué une chute croissante de pression pendant le fonctionnement de la première pompe (24) afin de déplacer l'échantillon de liquide (6) dans une direction de l'admission d'échantillon de liquide (4) à la première pompe (24).

5. Analyseur (2) pour liquides selon la revendication 4, **caractérisé par le fait que** l'analyseur (2) pour liquides comprend en outre des moyens d'entraînement (64) reliés de manière fonctionnelle à l'admission d'échantillon de liquide (4) pour faire varier son emplacement à l'intérieur de l'échantillon de liquide (6).

6. Analyseur (2) pour liquides selon l'une quelconque des revendications 1 à 5, **caractérisé par le fait que** l'unité de commande (40) est conçue pour commander le fonctionnement du premier module de pompe (P1) en réponse à la sortie reçue à partir du premier moniteur de pression (36) afin de maintenir la pression surveillée à une valeur égale ou supérieure à une valeur prédéfinie pendant un mouvement de l'échantillon de liquide (6) dans une direction de l'admission d'échantillon de liquide (4) aux conduites d'écoulement de liquide (22).

7. Analyseur (2) pour liquides selon l'une quelconque des revendications 1 à 6, **caractérisé par le fait que** l'analyseur (2) pour liquides comprend un second module de pompe (P2) couplé à une section (22b) des conduites d'écoulement de liquide (22) après l'une parmi l'au moins une zone de mesure (16) dans une direction d'écoulement de liquide du premier module de pompe (P1) à cette zone de mesure (16), et **par le fait qu'**un second moniteur de pression (38) est prévu pour surveiller une pression au niveau du second module de pompe (P2), le second moniteur de pression (38) étant configuré pour générer une sortie représentant une pression surveillée au niveau du second module de pompe (P2) en vue d'une réception par l'unité de commande (40) et utilisable par l'unité de commande (40) pour commander le fonctionnement des premier (P1) et second (P2) modules de pompe.

8. Analyseur (2) pour liquides selon la revendication 7, **caractérisé par le fait que** l'unité de commande (40) est conçue pour commander le fonctionnement des premier (P1) et second (P2) modules de pompe afin de réguler l'écoulement de liquide à travers l'au moins une zone de mesure (16 ; 16') en fonction de la sortie à partir du premier moniteur de pression (36) et reçue pendant le fonctionnement du premier module de pompe (P1) afin de déplacer du liquide à partir de l'admission d'échantillon (4) .

9. Analyseur (2) pour liquides selon la revendication 7 ou la revendication 8, **caractérisé par le fait qu'**est prévue une source de détergent liquide (CF) pour distribuer du détergent liquide avec ou sans air par l'intermédiaire des conduites de liquide (22) dans l'au moins une zone de mesure (16 ; 16'), et **par le fait que** l'unité de commande (40) est conçue pour faire fonctionner l'un, ou les deux, du premier module de pompe (P1) et du second module de pompe (P2) afin d'agiter le détergent liquide avec ou sans air dans l'au moins une zone de mesure (16 ; 16').
